# FASCICULE DE BREVET EUROPEEN

(11) **EP 0 806 974 B1**
(45) Date de publication et mention de la délivrance du brevet: **02.06.1999**
(21) Numéro de dépôt: 96901872.0
(22) Date de dépôt: 30.01.1996
(51) Int. Cl.: A62C 3/02, B64D 1/18

(54) **DISPOSITIF D'AIDE A L'EXTINCTION DES FEUX POUR AVIONS BOMBARDIERS D'EAU**
HILFSEINRICHTUNG FÜR FEUERLÖSCHFLUGZEUGE
FIRE-FIGHTING AID DEVICE FOR WATER BOMBERS

(30) Priorité: 31.01.1995 FR 9501098
(43) Date de publication de la demande: 19.11.1997
(73) Titulaire: SEXTANT AVIONIQUE, 78140 Velizy Villacoublay (FR)
(72) Inventeur: DENOIZE, Xavier, F-92402 Courbevoie Cédex (FR); FAIVRE, François, F-92402 Courbevoie Cédex (FR); PARUS, Roger, F-92402 Courbevoie Cédex (FR)
(74) Mandataire: Albert, Claude
(86) Numéro de dépôt international: FR9600148
(87) Numéro de publication internationale: WO9623549

(56) Documents cités:
- WO-A-93/02749
- WO-A-93/15955
- WO-A-94/08660
- US-A- 3 901 467

## Description

La présente invention concerne un dispositif d'aide à l'extinction des feux pour avions bombardiers d'eau. Elle s'applique notamment à la lutte contre les incendies.

Le développement de la lutte contre les incendies par avions bombardiers d'eau a connu un essor considérable, en particulier pour combattre les feux dans des endroits particulièrement peu accessibles par voies de terre ou éloignés des réserves d'eau.

Cependant, les manoeuvres de ces avions et la précision de largage de l'eau restent difficiles et un nombre d'échecs ou d'accidents sont à déplorer dans ces phases difficiles.

Il n'existe guère actuellement de systèmes dédiés à la détection et à la localisation de foyers d'incendies. Les systèmes utilisés sont en fait des systèmes classiques de localisation pour l'avion avec des procédures de vol à vue et d'acquisition visuelle des foyers.

Une demande de brevet internationale WO 93/02749 décrit un procédé pour la détection et la lutte contre les feux de forêts, utilisant notamment une carte vectorielle numérisée de la zone concernée.

Le but de l'invention est de permettre à l'équipage d'avions bombardiers d'eau, en particulier en présence de fumées, de mieux localiser les foyers d'incendie, donc l'endroit à éteindre, et éventuellement de transmettre la localisation à d'autres porteurs, d'optimiser la trajectoire de l'avion et la trajectoire de l'eau, enfin de sécuriser la trajectoire d'évasion des bombardiers d'eau. En particulier le système aide à l'évitement d'obstacles cachés par la fumée.

A cet effet, l'invention a pour objet un dispositif d'aide à l'extinction des feux embarqué dans un avion bombardier d'eau, caractérisé en ce qu'il comporte au moins un capteur de foyer d'incendie, des moyens pour repérer la position de l'avion, une base de données géographiques et des moyens de calcul de la trajectoire de l'avion en fonction de la position de ce dernier et de la position du foyer repérées dans la base de données.

L'invention a pour principaux avantages qu'elle s'adapte à tous types de reliefs et à tous types de conditions météorologiques, qu'elle est simple à mettre en oeuvre et qu'elle est économique.

D'autres caractéristiques et avantages de l'invention apparaîtront à l'aide de la description qui suit faite en regard de dessins annexés qui représentent :
- la figure 1, un avion bombardier d'eau à l'approche d'un foyer d'incendie ;
- la figure 2, par un synoptique, un mode de réalisation possible d'un dispositif selon l'invention ;
- la figure 3, un exemple de réalisation possible d'un dispositif selon l'invention.

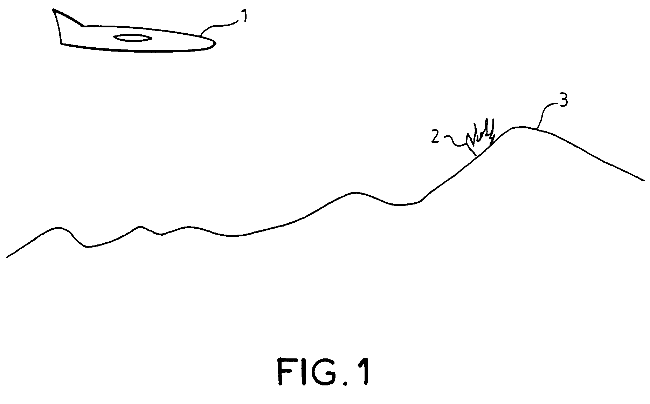

La figure 1 présente un avion bombardier d'eau 1 à l'approche d'un foyer d'incendie 2, l'avion étant équipé d'un dispositif selon l'invention. Il comprend au moins un capteur de foyer d'incendie. Ce capteur est par exemple un capteur externe sensible à la température. Ce capteur est par exemple une caméra à infrarouge qui permet de localiser précisément en site et en gisement, relativement à l'avion, le foyer de l'incendie par désignation humaine et/ou traitement automatique.

L'avion 1 possède également des moyens pour repérer sa position, par exemple en altitude, en latitude et en longitude, ainsi que les attitudes. Ces moyens sont par exemple des systèmes de navigation connus.

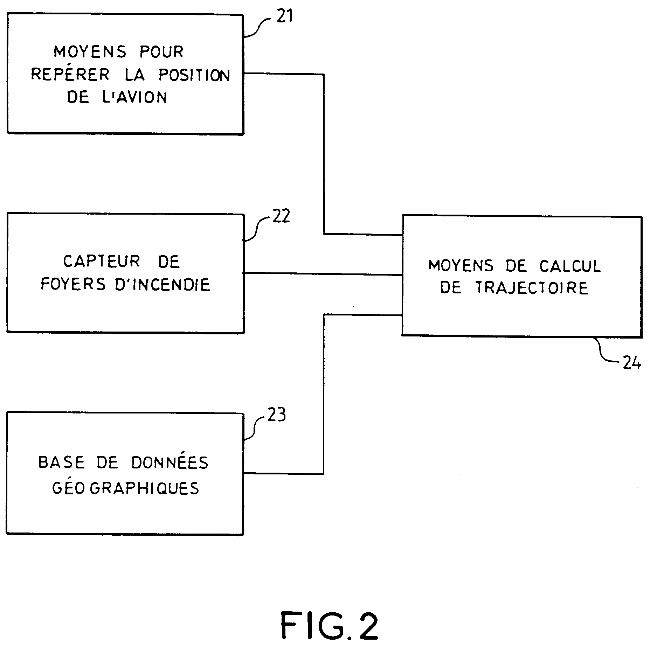

La figure 2, présente un synoptique d'un mode de réalisation possible d'un dispositif selon l'invention. Le dispositif comporte au moins des moyens 21 pour repérer la position de l'avion dans lequel ils sont placés, un capteur 22 de foyers d'incendie, une base de données géographiques 23 et des moyens 24 de calcul algorithmique permettant par exemple la localisation, le guidage et le largage.

La base de données géographiques 23, qui est en fait une base de données de terrain, possède en mémoire, un maillage en latitude, en longitude et en altitude du terrain environnant. Les positions de l'avion 1 et du foyer 2 sont repérées dans la base de données par rapport au maillage précité. Ce repérage est par exemple réalisé par les moyens 24 de calcul algorithmique. Ces derniers calculent ensuite, par exemple, la trajectoire permettant à l'avion de se présenter de la manière la plus sûre et la plus optimale pour larguer sa charge. Ces moyens proposent par l'exemple , l'instant d'apparition d'un signal de largage en tenant compte de la trajectoire de dégagement de l'avion devant éviter le relief 3.

Les moyens de calcul 24 ont donc par exemple pour objectif de reconstituer des signaux d'écartométrie et de guidage à partir :
- de la position connue de l'avion ;
- de la direction connue du foyer de l'incendie donnée par le capteur 22, en site et en gisement par rapport à l'avion, le capteur pouvant être par exemple à infrarouge. Des moyens de désignation d'une partie du foyer peuvent être par exemple prévus si le foyer est étendu ;
- de la base de données 23 possédant le relief et permettant ainsi de mieux appréhender la trajectoire dans le plan vertical et horizontal.
- de la position calculée de l'incendie en coordonnées terrestres à partir d'un calcul élaborant le passage de la direction de la ligne de visée donnée pour le capteur 22 du référentiel avion au référentiel sol en utilisant les informations d'attitude d'une part et l'intersection de la ligne de visée avec la base de données d'autre part.

Les moyens de calcul élaborent à partir de ces informations une trajectoire idéale et donc des ordres de guidage à présenter à l'équipage de l'avion. Un calcul de largage de l'eau qui tient compte de l'attitude de l'avion, de son altitude, de sa vitesse et de la vitesse du vent par exemple permet le traitement de la balistique de la charge d'eau.

Le calcul de la trajectoire d'évitement peut par exemple aussi tenir compte de la masse diminuée de l'avion.

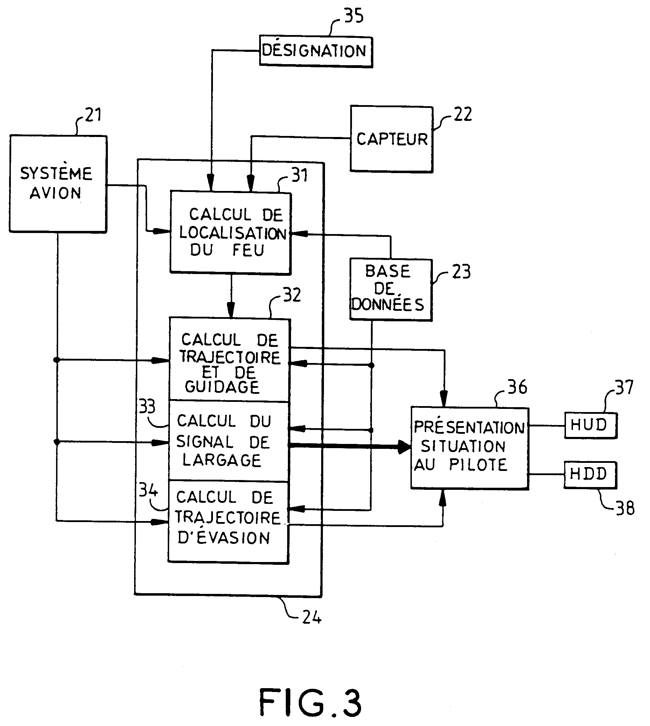

La figure 3 présente un exemple de réalisation possible d'un dispositif selon l'invention.

Les moyens 21 pour repérer la position, les attitudes et l'orientation de l'avion sont par exemple constitués du système avion tel que les systèmes GPS et IRS notamment, GPS étant connu dans le métier comme étant les initiales de l'expression anglo-saxonne "Global Position System" et IRS comme étant les initiales de l'expression anglo-saxonne "Inertial Reference System".

Les moyens 24 de calcul de trajectoire sont par exemple constitués d'un calculateur 31 de localisation du foyer d'incendie, d'un calculateur 32 de trajectoire et de guidage, d'un calculateur 33 pour la détermination du signal de largage et d'un calculateur 34 de la trajectoire d'évasion de l'avion après le largage de l'eau. Ces différents calculateurs peuvent être regroupés en un ou plusieurs calculateurs. Ils peuvent aussi par exemple être réalisés sur une même puce de semi-conducteur.

Le calculateur 31 de localisation du feu est relié aux moyens 21 de repère de la position de l'avion, au système avion par exemple, au capteur 22 et à la base de données géographiques 23. Connaissant la position de l'avion par rapport à la base de données grâce aux moyens de repères 21, et la direction du foyer par rapport à l'avion grâce au capteur 22, le calculateur 31 peut alors définir la localisation du feu par rapport à la base de données et donc sa situation géographique exacte.

Le calculateur 31 de localisation est par exemple aussi relié à des moyens de désignation 35 afin de désigner notamment une partie du foyer d'incendie si ce dernier est étendu. La désignation peut être humaine et/ou réalisée par un traitement automatique.

Le calculateur 32 de trajectoire et de guidage est par exemple relié au système avion 21 et à la base de données géographiques 23 ainsi qu'au calculateur 31 de localisation du feu. Il peut alors calculer la trajectoire optimale en fonction de la situation de l'avion bombardier d'eau par rapport à la situation du foyer d'incendie à éteindre à l'aide de la base de données, notamment pour passer par un point de largage optimal et pour éviter les obstacles.

Le calculateur 33 du signal de largage est relié par exemple au calculateur 32 et au système avion 21 pour déterminer l'instant d'envoi du signal de largage de l'eau en fonction de la trajectoire, de la vitesse de l'avion, de sa hauteur et de son altitude ainsi que de la vitesse et de la direction du vent provenant par exemple du système avion ou d'une valeur transmise par le sol, ainsi que de tout autre paramètre permettant d'évaluer la balistique de la charge d'eau à larguer, sa masse notamment.

La génération du signal de largage peut aussi par exemple être déterminée en fonction de la ligne de visée, celle-ci étant par exemple calculée par le calculateur 33 du signal de largage. Le signal de largage est généré alors en fonction de la position du point d'intersection de la ligne de visée avec la base de données géographique 23, le point d'intersection étant calculé par le calculateur 33 du signal de largage. A cet effet, la base de données 23 est notamment reliée à ce calculateur 33. Le signal de largage peut par exemple être donné après un compte à rebours.

Le calculateur 33 de calcul du signal de largage est par exemple relié à des moyens 36 de présentation d'informations de situation au pilote. Ces moyens 36 sont notamment destinés à intertacer les calculateurs 32, 33, 34 avec des moyens de visualisation ou de sonorisation.

Le signal de largage produit peut par exemple être présenté de façon visuelle et/ou sonore. En cas de signal visuel, ce dernier peut alors être par exemple délivré à un collimateur tête haute 37 et/ou à une visualisation tête basse 38.

L'utilisation d'un collimateur tête haute permet en outre la visualisation en conformité avec le paysage des paramètres de guidage et de largage.

Le calculateur de la trajectoire d'évasion 34 est par exemple relié au système avion 21, à la base de données géographiques 23 et au calculateur 33 du signal de largage. Le calcul de cette trajectoire est alors calculé en fonction de la vitesse de l'avion, du terrain, celui-ci étant fourni par la base de données 23, et de l'instant de largage de l'eau. Le calcul de la trajectoire d'évasion peut par exemple tenir compte de la masse de l'avion diminuée de sa charge d'eau.

Le calculateur 32 de trajectoire et de guidage ainsi que le calculateur 34 de la trajectoire d'évasion sont par exemple eux aussi reliés aux moyens 36 de présentation de situation au pilote.

Les différentes informations fournies par ces calculateurs 32, 33, 34 peuvent être présentées au pilote en superposition du paysage extérieur par utilisation d'un collimateur tête haute. Elles peuvent aussi être présentées au pilote sous forme de symboles appropriés, par exemple par utilisation d'un collimateur tête basse.

Le dispositif selon l'invention, peut aussi à l'aide de ses moyens de calcul de trajectoire précités, fournir au pilote des informations de guidage pour toutes opérations de basse visibilité. Il peut aussi par exemple fournir des informations nécessaires au guidage de l'avion lors des opérations de remplissage de ce dernier sur tous types de réservoirs d'eau.

L'application du dispositif selon l'invention a été présentée pour le cas du largage d'une charge d'eau. Cependant, ce dispositif peut convenir pour le largage de tous types de produits destinés à l'extinction d'un foyer d'incendie.

## Revendications

1. Dispositif d'aide à l'extinction des feux embarqué dans un avion (1) bombardier d'eau utilisant une base de données géographiques, caractérisé en ce qu'il comporte au moins un capteur (22) de foyer d'incendie (2), des moyens (21) pour repérer la position de l'avion, une base de données géographiques (23) et des moyens (24) de calcul de la trajectoire de l'avion (1) en fonction de la position de ce dernier et de la position du foyer (2) repérées dans la base de données (23).

2. Dispositif selon la revendication 1, caractérisé en ce que la base de données géographiques (23) a en mémoire un maillage en latitude, en longitude et en altitude du terrain environnant.

3. Dispositif selon la revendication 1, caractérisé en ce que les moyens (24) de calcul de la trajectoire de l'avion (1) comprennent :
- un calculateur (31) de localisation du foyer d'incendie (2) relié aux moyens (21) pour repérer la position de l'avion (1), au capteur (22) de foyer d'incendie et à la base de données géographiques (23) ;
- un calculateur de trajectoire et de guidage relié au calculateur (31) de localisation, aux moyens (21) pour repérer la position de l'avion et à la base de données géographiques (23) ;
- un calculateur (33) du signal de largage relié au calculateur (32) de trajectoire et de guidage, aux moyens (21) pour repérer la position de l'avion (1) et à la base de données géographiques (23) ;
- un calculateur (34) de la trajectoire d'évasion de l'avion (1) relié au calculateur (33) du signal de largage, aux moyens (21) pour repérer la position de l'avion (1) et à la base de données géographiques (23).

4. Dispositif selon la revendication 3, caractérisé en ce qu'il comprend des moyens (35) de désignation du foyer d'incendie (2).

5. Dispositif selon la revendication 3, caractérisé en ce que le calculateur (33) du signal de largage détermine l'instant d'envoi de ce signal , en fonction de la vitesse de l'avion (1), de sa position, de la vitesse du vent et de la masse de la charge d'eau à larguer.

6. Dispositif selon l'une quelconque des revendications 3 à 5, caractérisé en ce que le calculateur (33) du signal de largage calculant la ligne de visée de l'avion (1), il génère le signal de largage en fonction de la position du point d'intersection de la ligne de visée avec la base de données géographiques (23), le calculateur (33) calculant par ailleurs ce point d'intersection.

7. Dispositif selon l'une quelconque des revendications précédentes, caractérisé en ce que les moyens (21) pour repérer la position de l'avion (1) sont constitués du système avion.

8. Dispositif selon l'une quelconque des revendications précédentes, caractérisé en ce que le capteur (22) de foyer d'incendie est sensible à la température.

9. Dispositif selon la revendication 8, caractérisé en ce que le capteur (22) de foyer d'incendie est une caméra à infrarouge.

10. Dispositif selon l'une quelconque des revendications précédentes, caractérisé en ce que les moyens (24) de calcul de la trajectoire de l'avion sont reliés à des moyens (36) de présentation d'informations au pilote, les informations étant fournies en superposition sur le paysage extérieur par un collimateur tête haute et/ou sous forme de symboles par un collimateur tête basse.

11. Dispositif selon la revendication 10, caractérisé en ce que le signal de largage est fourni de façon sonore.

## Claims

1. Device for assisting with the extinguishing of fires, carried on board a water-bombing aircraft (1) using a geographical database, characterized in that it has at least one sensor (22) for sensing the source of the fire (2), means (21) for pinpointing the position of the aircraft, a geographical database (23) and means (24) for calculating the route of the aircraft (1) as a function of the position of this aircraft and of the position of the source (2) as pinpointed in the database (23).

2. Device according to Claim 1, characterized in that the geographical database (23) has in memory a grid of the surrounding terrain in latitude, longitude and altitude.

3. Device according to Claim 1, characterized in that the means (24) of calculating the route of the aircraft (1) comprise:
- a computer (31) for locating the source of the fire (2), connected to the means (21) for pinpointing the position of the aircraft (1), to the sensor (22) for sensing the source of the fire and to the geographical database (23);
- a route and guidance computer connected to the location computer (31), to the means (21) for pinpointing the position of the aircraft and to the geographical database (23);
- a drop signal computer (33) connected to the route and guidance computer (32), to the means (21) for pinpointing the position of the aircraft (1) and to the geographical database (23);
- a computer (34) for calculating the escape route of the aircraft (1) connected to the drop signal computer (33), to the means (21) for pinpointing the position of the aircraft (1) and to the geographical database (23).

4. Device according to Claim 3, characterized in that it comprises means (35) for identifying the source of the fire (2).

5. Device according to Claim 3, characterized in that the drop signal computer (33) determines the instant at which this signal is sent as a function of the speed of the aircraft (1), its position, the wind speed and the mass of the payload of water to be dropped.

6. Device according to any one of Claims 3 to 5, characterized in that since the drop signal computer (33) calculates the line of sight of the aircraft (1), it generates the drop signal as a function of the position of the point at which the line of sight intersects the geographical database (23), the computer (33) also calculating this point of intersection.

7. Device according to any one of the preceding claims, characterized in that the means (21) for pinpointing the position of the aircraft (1) consist of the aircraft system.

8. Device according to any one of the preceding claims, characterized in that the sensor (22) for sensing the source of the fire is sensitive to temperature.

9. Device according to Claim 8, characterized in that the sensor (22) for sensing the source of the fire is an infrared camera.

10. Device according to any one of the preceding claims, characterized in that the means (24) of calculating the route of the aircraft are connected to means (36) for displaying information to the pilot, the information being supplied superimposed on the external landscape using a head-up display and/or in the form of symbols on a head-down display.

11. Device according to Claim 10, characterized in that the drop signal is given acoustically.

## Patentansprüche

1. Hilfsvorrichtung für die Brandbekämpfung in einem Wasserabwurf-Flugzeug (1) unter Verwendung einer Basis von geographischen Daten, dadurch gekennzeichnet, daß sie mindestens eine Sonde (22) zur Ermittlung des Brandherds (2), Mittel (21) zur Ermittlung der Position des Flugzeugs, eine Basis (23) geographischer Daten und Mittel (24) zur Berechnung des Kurses des Flugzeugs (1) abhängig von der Position des Flugzeugs und der Position des Brandherds (2) aufweist, die in der Datenbasis enthalten sind.

2. Vorrichtung nach Anspruch 1, dadurch gekennzeichnet, daß die Basis geographischer Daten (23) ein Raster des umgebenden Geländes nach Breite, Länge und Höhe im Speicher enthält.

3. Vorrichtung nach Anspruch 1, dadurch gekennzeichnet, daß die Mittel (24) zur Berechnung des Flugkurses des Flugzeugs (1) aufweisen:
- einen Rechner (31) zur Ortung des Brandherds (2), der an die Mittel (21) zur Ermittlung der Position des Flugzeugs (1), an die Sonde (22) zur Ermittlung des Brandherds und an die Basis (23) geographischer Daten angeschlossen ist,
- einen Rechner (32) zur Berechnung des Flugkurses und zur Führung, der an den Rechner (31) zur Ortung des Brandherds, an die Mittel (21) zur Ermittlung der Position des Flugzeugs und an die Basis (23) geographischer Daten angeschlossen ist,
- einen Rechner (33) zur Berechnung des Abwurfsignals, der mit dem Rechner (32) zur Berechnung des Flugkurses und zur Führung, mit den Mitteln (21) zur Ermittlung der Position des Flugzeugs (1) und mit der Basis (23) geographischer Daten verbunden ist,
- einen Rechner (34) für den Rückflugkurs des Flugzeugs (1), der mit dem Rechner (33) für das Abwurfsignal, den Mitteln (21) zur Ermittlung der Position des Flugzeugs (1) und der Basis (23) geographischer Daten verbunden ist.

4. Vorrichtung nach Anspruch 3, dadurch gekennzeichnet, daß sie Mittel (35) zur Bezeichnung des Brandherds (2) besitzt.

5. Vorrichtung nach Anspruch 3, dadurch gekennzeichnet, daß der Rechner (33) zur Berechnung des Abwurfsignals den Zeitpunkt der Auslösung dieses Signals abhängig von der Geschwindigkeit des Flugzeugs (1), seiner Position, der Windgeschwindigkeit und der abzuwerfenden Wassermasse bestimmt.

6. Vorrichtung nach einem beliebigen der Ansprüche 3 bis 5, dadurch gekennzeichnet, daß der Rechner (33) zur Berechnung des Abwurfsignals die Visierlinie des Flugzeugs (1) berechnet und das Abwurfsignal abhängig von der Lage des Schnittpunkts der Visierlinie mit der Basis (23) geographischer Daten erzeugt, wobei der Rechner (33) außerdem diesen Schnittpunkt berechnet.

7. Vorrichtung nach einem beliebigen der vorstehenden Ansprüche, dadurch gekennzeichnet, daß die Mittel (21) zur Ermittlung der Position des Flugzeugs (1) von Flugzeugnavigationssystem gebildet werden.

8. Vorrichtung nach einem beliebigen der vorstehenden Ansprüche, dadurch gekennzeichnet, daß die Sonde (22) zur Ermittlung des Brandherds auf Temperaturen anspricht.

9. Vorrichtung nach Anspruch 8, dadurch gekennzeichnet, daß die Sonde (22) zur Ermittlung des Brandherds eine Infrarotkamera ist.

10. Vorrichtung nach einem beliebigen der vorstehenden Ansprüche, dadurch gekennzeichnet, daß die Mittel (24) zur Berechnung des Flugkurses des Flugzeugs mit Mitteln (36) verbunden sind, die dem Piloten Informationen präsentieren, wobei die Informationen in Überlagerung der äußeren Landschaft durch einen Kollimator im Blickfeld des Piloten und/oder in Form von Symbolen durch einen Kollimator unterhalb des Blickfelds geliefert werden.

11. Vorrichtung nach Anspruch 10, dadurch gekennzeichnet, daß das Abwurfsignal ein akustisches Signal ist.
